# EUROPÄISCHE PATENTSCHRIFT

(11) **EP 0 852 532 B1**
(45) Veröffentlichungstag und Bekanntmachung des Hinweises auf die Patenterteilung: **19.04.2000**
(21) Anmeldenummer: 96933383.0
(22) Anmeldetag: 25.09.1996
(51) Int. Cl.: B29C 47/16

(54) **VORRICHTUNG ZUR VERÄNDERLICHEN BEGRENZUNG EINES FLACHEN FLIESSKANALS**
APPARATUS FOR VARIABLE LIMITATION OF A FLAT FLOW CHANNEL
DISPOSITIF DE LIMITATION VARIABLE D'UN CANAL D'ECOULEMENT PLAT

(30) Priorität: 27.09.1995 DE 19535930
(43) Veröffentlichungstag der Anmeldung: 15.07.1998
(60) Teilanmeldung: 99110834.1
(73) Patentinhaber: GROSS, Heinz, Dr.-Ing., D-64380 Rossdorf (DE)
(72) Erfinder: GROSS, Heinz, Dr.-Ing., D-64380 Rossdorf (DE)
(74) Vertreter: Rau, Manfred, Dr. Dipl.-Ing.
(86) Internationale Anmeldenummer: EP9604183
(87) Internationale Veröffentlichungsnummer: WO9711833

(56) Entgegenhaltungen:
- DE-A- 2 305 877
- DE-A- 4 020 728
- DE-C- 4 400 069
- DE-U- 9 408 463
- DE-U- 29 500 803
- DE-U- 29 514 043

## Beschreibung

Die Erfindung betrifft eine Vorrichtung gemäß dem Oberbegriff des Anspruchs 1.

Vorrichtungen, wie oben beschrieben, sind in vielfältiger Form bekannt. Sie werden speziell im Bereich der Kunststoffverarbeitung in Fließkanälen für Thermoplastschmelzen eingesetzt, um den Fließkanalwiderstand verändern zu können. In EP 0 367 022, DE 35 30 383 A1, DE 44 00 069 C1 und DE-AS 12 31 412 werden Extrusionsdüsen beschrieben, bei denen die Fließkanalhöhe verändert werden kann. Diese bekannten Lösungen bestehen aus einer mehr oder minder dicken, massiven, einstückigen, metallischen Wand, die über Stellmittel, die von der Rückseite auf die Wand drücken, deformiert werden kann. Sie funktionieren nur solange, wie die massive Wand bei der Deformation den linear elastischen Deformationsbereich nicht überschreitet, da sie darauf angewiesen sind, daß die Wand beim Rückstellen der Stellmittel wieder exakt in die ursprüngliche Ausgangslage zurückkehrt. Wegen der bei diesen Vorrichtungen aus Festigkeitsgründen notwendigen relativ dicken Wand sind sowohl der gleichmäßigen Verstellung der Wand über der gesamten Breite des Fließkanals (Gesamtverstellung) als auch der lokal auf einen kleinen Wandbereich begrenzten Verstellung (Relativverstellung) enge Grenzen gesetzt.

In DE-OS 23 05 877 wird eine Fließkanalbegrenzung beschrieben, die sich aus mehreren dünnen, flächig aufeinanderliegenden Einzelblechen zusammensetzt und damit eine größere Flexibilität aufweist. Die Flexibilität wird jedoch damit erkauft, daß bei dieser Lösung das wichtige Kriterium der absoluten Dichtigkeit gegenüber dem im Fließkanal strömenden Fluid nicht erfüllt wird, da für die Verstellung eine Beweglichkeit aller Einzelbleche in den Randbereichen erforderlich ist. Die Bleche ragen dazu in ihren Randbereichen in Nuten hinein, die sich zwischen den beiden Hälften des Fließkanalkörpers befinden. Die für eine Abdichtung in diesen Randbereichen notwendige Flächenpressung kann damit nicht aufgebracht werden, da sie keine Relativbewegung zwischen den Blechen und den Fließkanalhälften mehr zulassen würde.

Lösungen mit einem großen Verstellbereich bei gleichzeitiger absoluter Dichtigkeit des Fließkanals sind demnach mit den bekannten Vorrichtungen der gattungsgemäßen Art nicht vorbeschrieben. Auch bieten die bekannten Vorrichtungen ebensowenig die Möglichkeit ein Verfahren durchzuführen, bei dem ein Massestrang durch einen absolut dichten Werkzeugkanal gepreßt wird, wobei mittels zweier im Werkzeug integrierter unabhängiger Stellsysteme, die auf eine Fließkanalwand einwirken, die Dicke der Massebahn während des Masseaustrags entweder in Ihrer Gesamtheit oder nur lokal an bestimmten Stellen oder aber beides gleichzeitig verändert werden kann, oder bei dem die Breite der Massebahn während des Austrags durch Veränderung der Geometrie des Fließkanals im Werkzeug geändert werden kann.

Da derartige Vorrichtungen, um einen Fließkanal mit einem großen Stellweg mittels zweier auf eine Fließkanalwand arbeitender unabhängiger Stellmittel gleichzeitig sowohl in seiner Gesamthöhe als auch nur bereichsweise in seiner Höhe zu verstellen, bisher nicht zur Verfügung standen, sind bis jetzt auch keine Verfahren bekannt, mit denen eine Massebahn während ihres Austrags in dieser Weise verändert werden kann. Der Erfindung liegt daher die Aufgabe zugrunde, einerseits eine Vorrichtung der gattungsgemäßen Art so auszugestalten, daß vergrößerte Gesamt- und Relativverstellbereiche bei gleichzeitiger absoluter Dichtheit der Vorrichtung möglich sind.

Diese Aufgabe wird erfindungsgemäß durch die Merkmale des kennzeichnenden Teils des Anspruchs 1 gelöst.

Unter einem Blechpaket ist ein Stapel von Blechen, deren Unterseiten jeweils dicht auf den Oberseiten des darunter befindlichen Blechs liegen, zu verstehen. Ein Blech, dessen eine Oberfläche eine Fließkanalwand bildet kann nach Anspruch 2 auch in einem Rahmen eingebunden sein, der in den Fließkanal eingeschraubt, eingeschweißt oder ähnlich dicht eingebunden ist. Die gewünschte Flexibilität des Blechpakets wird erreicht, wenn die Einzelbleche nach Anspruch 3 eine Dicke kleiner 2 mm, vorzugsweise jedoch kleiner 1 mm besitzen. Für die Funktion der Vorrichtung kann es nach Anspruch 4 sinnvoll sein, daß die Einzelbleche wenigstens an einer ihrer Kanten mit einem Rahmen oder mit dem Körper, in den der Fließkanal eingebunden ist, verschweißt sind. Es ist ebenfalls für die Flexibilität des Blechpakets besonders vorteilhaft, wenn das Paket nicht eben ist, sondern nach Anspruch 5 eine Krümmung aufweist. Eine weitere Vergrößerung des Stellbereichs wird erreicht, wenn man nach Anspruch 6 die Stellelemente kraftschlüssig an das Blechpaket anbindet, so daß es über Zug und Druck deformiert werden kann.

Weitere Einzelheiten der Erfindung ergeben sich aus der nachfolgenden Beschreibung einiger Ausführungsbeispiele an Hand der Zeichnung. Es zeigt:
- Fig. 1: Eine Vorrichtung nach der Erfindung im Inneren eines Fließkanals in teilweise geschnittener Darstellung,
- Fig. 2: den Schnitt A-A aus Fig. 1,
- Fig. 3: eine andere konstruktive Lösung der Vorrichtung nach der Erfindung, bei der das Blechpaket in einen separaten Rahmen eingeschweißt ist,
- Fig. 4: eine weitere konstruktive Lösung der Vorrichtung nach der Erfindung mit einer Zug- und Druckanbindung der Stellschrauben,
- Fig. 5: einen Schnitt durch eine Lösungsvariante der Vorrichtung nach der Erfindung, die sich am Ende eines Fließkanals befindet,
- Fig. 6: ein anderes Beispiel einer Verstelleinrichtung in Schnittdarstellung, die eine Verstellung der Wand auf Zug und Druck erlaubt,
- Fig. 7: ein Ausschnitt aus einem Werkzeug, bei dem beide Werkzeugwände mit einer Verstelleinrichtung versehen sind, die jeweils unabhängige Stellschrauben für eine Gesamtverstellung und für eine Relativverstellung besitzen,
- Fig. 8: skizziert ein Verfahren zum gesteuerten bzw. geregelten Austragen einer Massebahn mit veränderlicher Geometrie.

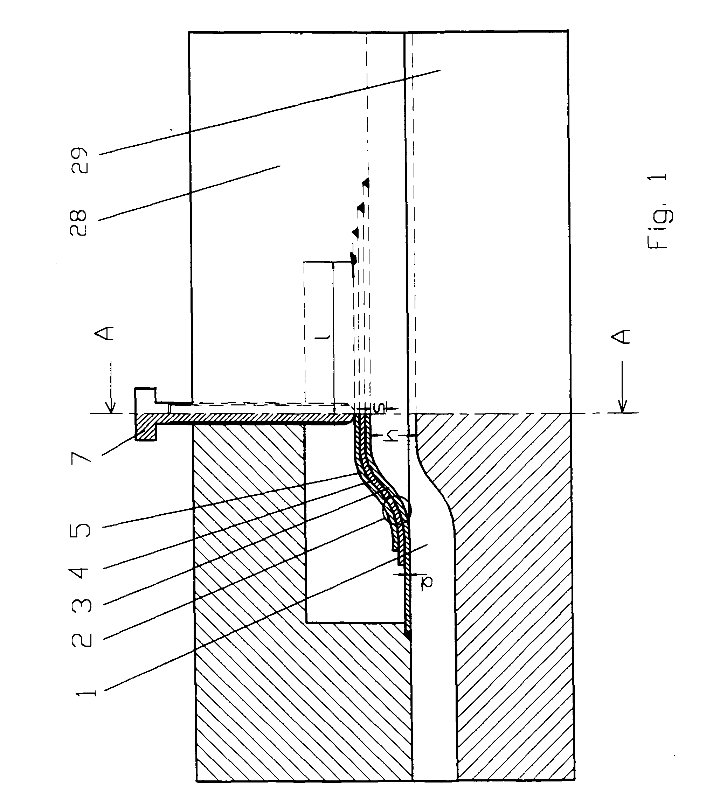

Wie Fig. 1 erkennen läßt, befindet sich die Einrichtung zur veränderlichen Begrenzung eines flachen Fließkanals innerhalb eines Werzeugs, das aus einer oberen (28) und einer unteren Werkzeughälfte (29) besteht. Der Fließkanal (1) besitzt mindestens eine Wand, die aus einem Paket (2) dünner Einzelbleche (3, 4 und 5) gebildet wird. Das Paket (2) wiederum setzt sich aus einem Fließkanalblech (3), das mit dem Fließkanal eine gemeinsame Wand besitzt, und das aus Gründen der Dichtheit gegenüber dem im Fließkanal strömenden Medium ringsum fest in die Werkzeughälfte (28) eingeschweißt ist, sowie mindestens einem Stützblech (4), zusammen. Prinzipiell können für das Fließkanalblech (3) auch andere Verbindungsmethoden mit der Werkzeughälfte (28), der den Fließkanal (1) bildet, benutzt werden, solange diese eine absolute Dichtheit gegenüber dem im Fließkanal (1) strömenden Medium garantieren. Je nach Anwendung können auch beliebig viele weitere Stützbleche (4 und 5) verwendet werden. Die Stützbleche (4 und 5) sind entweder wie in Fig. 1 dargestellt nur an einer Seite mit der Werkzeughälfte (28) verschweißt oder verbunden, sie können aber auch nur auf das Fließkanalblech aufgelegt sein. Über einen Kraft- oder Formschluß sollte jedoch sichergestellt sein, daß zumindest an einem Punkt oder auf einer Linie keine Relativbewegungen der Einzelbleche (3 - 5) untereinander auftreten können, um die generelle Lage der Einzelbleche zueinander sicherzustellen. Um den bei der Deformation erforderlichen Längenausgleich der Einzelbleche (3 - 5) untereinander zuzulassen, sollten sich die Oberflächen der Einzelbleche (3 - 5) jedoch zumindest bereichsweise relativ zueinander verschieben lassen. Die Einzelbleche (3 - 5) können aus metallischen Werkstoffen bestehen, hier insbesondere aus elastischen Federstählen, sie können aber auch aus anderen Werkstoffen, wie zum Beispiel aus Kunststoffen sein. Sie müssen auch nicht alle aus dem gleichen Werkstoff bestehen.

Die Blechdicke (d) der Einzelbleche (3 - 5) hängt von dem jeweiligen Einsatzfall und dem gewählten Werkstoff ab. Bei Metallen sollte sie, um eine große Deformation zu ermöglichen, in der Regel kleiner, gleich 2 mm, vorzugsweise jedoch kleiner, gleich 1 mm sein. Die Dicke (d) der Einzelbleche (3 - 5) muß nicht notwendigerweise gleich sein, im Einzelfall kann es von Vorteil sein, abgestufte Blechdicken (d) einzusetzen. Das Blechpaket (2) kann eben sein, es ist jedoch von Vorteil, wenn es wie in Fig. 1 dargestellt, gekrümmt ist, da durch die Krümmung die Bildung von Zugspannungen speziell im fest eingeschweißten Fließkanalblech (3), reduziert werden kann. Auf das Blechpaket (2) wirken von der Rückseite Stellmittel (7) ein, mit denen die Position des Blechpakets verändert werden kann. Die Länge (1) vom Beginn des Blechpakets (2) bis zum Kraftangriffspunkt der Stellmittel (7) sollte möglichst lang sein, um einen großen Stellweg (s) erreichen zu können. Sie sollte mindestens 20 mm betragen, vorzugsweise jedoch größer 30 mm sein.

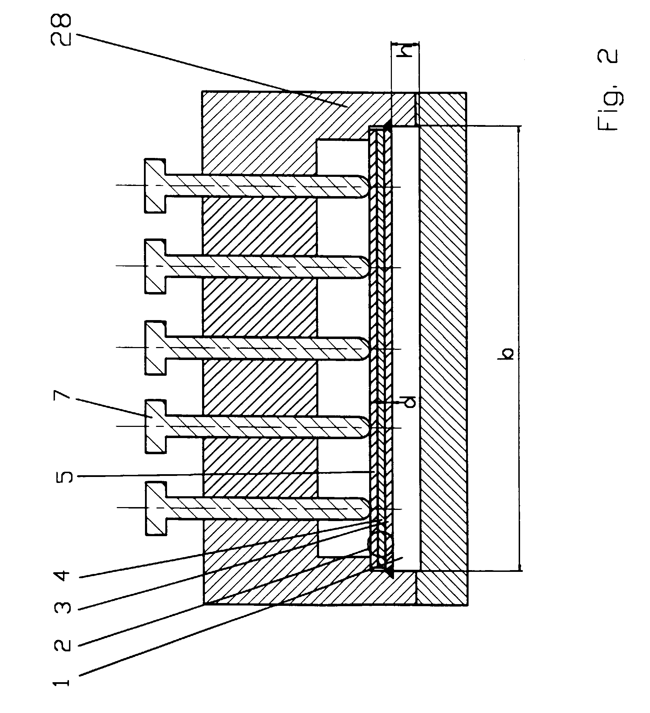

Die Art der einsetzbaren Stellmittel ist vielfältig. Es können im einfachsten Fall, wie in Bild 1 dargestellt, Schrauben sein, es können aber auch Dehnbolzen, Motoren, Piezotranslatoren oder ähnliche Elemente eingesetzt werden. Prinzipiell kann der Stellweg (s) auch über ein Fluid erzeugt werden. Die Vorrichtung ist bereits mit einem Stellmittel funktionsfähig, vorteilhaft ist jedoch die Verwendung mehrerer Stellmittel über der Breite (b) des Kanals, die in definiertem Abstand voneinander positioniert sind, wie dies in Fig. 2 dargestellt ist. Diese Figur zeigt den Querschnitt des Fließkanals (1) entsprechend dem Schnitt A - A aus Fig. 1. Man erkennt darin, daß mehrere Stellschrauben (7), die über ein Gewinde in der oberen Werkzeughälfte (28) eingebunden sind, von oben auf das Blechpaket (2) einwirken. Fig. 2 zeigt auch, daß die Stützbleche (4 und 5) des Blechpakets (2) seitlich nicht mit der Werkzeughälfte (28) verbunden sind. Unter einem flachen Fließkanal sei ein Fließkanal mit einem Verhältnis der Fließkanalbreite (b) zu der Fließkanalhöhe (h) von mindesten 10 verstanden. Der Fließkanal kann auch rund sein. In diesem Fall wird zur Ermittlung des Verhältnisses statt der Fließkanalbreite der mittlere Fließkanalumfang herangezogen.

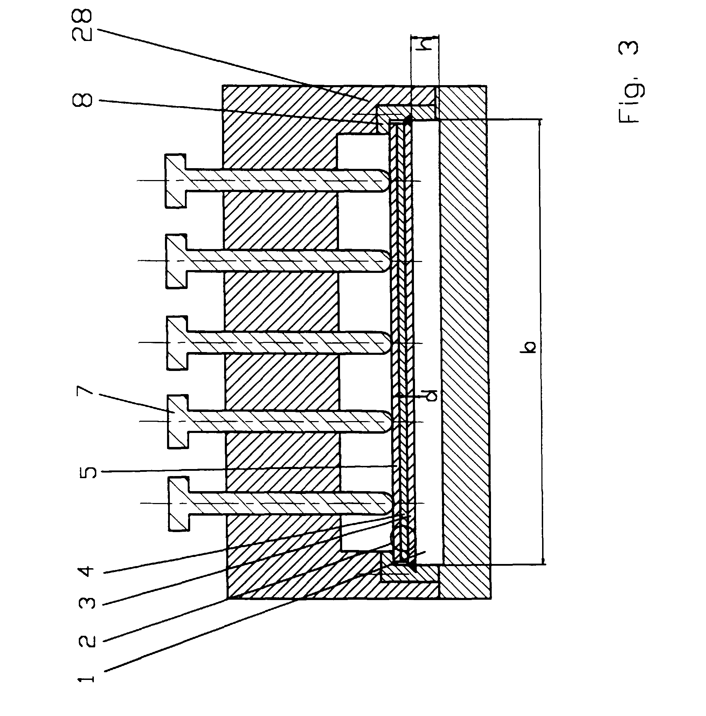

Fig. 3 zeigt eine andere Form der Integration des Blechpakets (2) in die Werkzeughälfte (28). Dabei ist das Blechpaket (2), auf das die Stellschrauben (7) zur Verstellung der Geometrie des Fließkanals (1) von oben einwirken, in einen separaten Rahmen (8) eingeschweißt, der dann in die Werkzeughälfte (28) eingeschraubt ist. Diese Lösung hat den Vorteil, daß das Blechpaket (2) mit geringem Aufwand ausgetauscht werden kann.

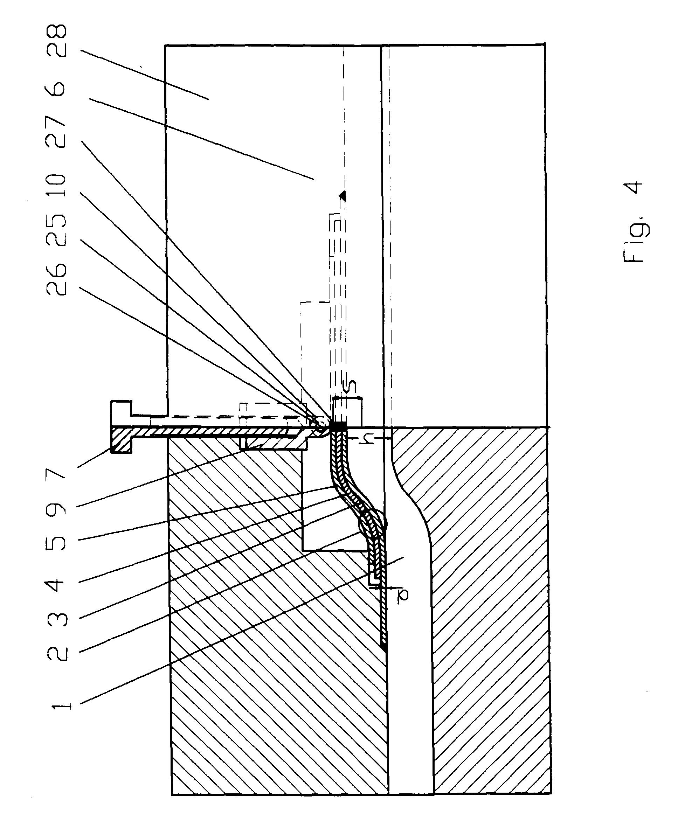

Fig. 4 zeigt die Vorrichtung aus Fig. 1 mit einem nochmals vergrößerten Stellbereich. In diesem Fall ist das Blechpaket (2) mittels eines angeschweißten partiell geschlitzten Rohres (10) formschlüssig mit den Gewindehülsen (9) verbunden. Der Formschluß wird hergestellt indem ein Rundstab (26) durch das im unteren Bereich (27) mit dem Blechpaket verschweißte und bis auf die Tiefe des Blechpakets partiell geschlitzte Rohr (10) und durch die in diese Schlitze hineinragenden am Ende der Gewindehülsen (9) befindlichen Ösen (25) gesteckt wird. Durch Drehen der Stellschrauben (7), die sich durch ein Gewinde in der oberen Werkzeughälfte (28) abstützen und in ihrem unteren Bereich in die Gewindehülsen (9) hineinragen, kann nun die Höhe (h) des Fließkanals (1) sowohl vergrößert als auch verkleinert werden. Außerhalb des verschweißung Bereiches (27) können sich die Oberflächen der Einzelbleche (3 - 5) wiederum relativ zueinander bewegen, wodurch die hohe Flexibilität im Blechpaket (2) erhalten bleibt. Bei dieser Lösung werden die Stützbleche (3,4, 5) nicht mit der Werkzeughälfte verschweißt. Vorteil der formschlüssigen Anbindung ist, daß man die Fließkanalhöhe (h) nicht nur verringern , sondern auch vergrößern kann. Weiterhin ist man nicht auf die elastische Rückstellung des Blechpakets angewiesen, so daß der mögliche Stellweg (s) nochmals größer sein kann. Bei flächenmäßig groß dimensionierten Blechpaketen sind mit dieser Konstruktion Stellwege (s) im Bereich größer 20 mm erreichbar.

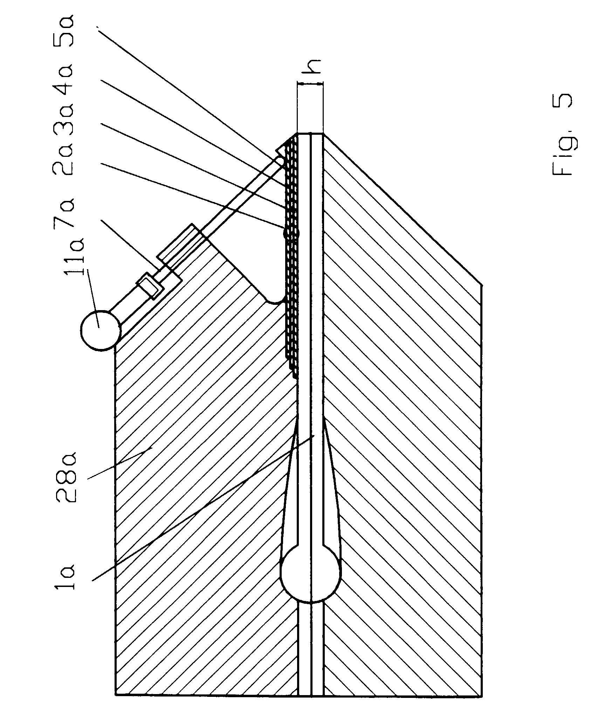

Zur eindeutigen Identifikation sind ab Fig. 5 Positionen mit gleicher Funktion auch mit der gleichen Ziffer unter Zusatz eines für jede Zeichnung eigenen Buchstabens gekennzeichnet. Fig. 5 zeigt einen Schnitt durch eine Lösungsvariante einer Verstelleinrichtung nach der Erfindung, die sich am Ende eines Fließkanals befindet. Dabei bildet das Ende des Blechpakets (2a) gleichzeitig das Ende des Fließkanals (1a). Die Stellschrauben (7a), die in einem Gewinde in der Werkzeugoberhälfte (28a) sitzen, wirken wiederum von oben auf das Blechpaket (2a) mit den Einzelblechen (3a, 4a, und 5a) ein. Durch manuelles Drehen oder durch Drehen mittels eines Stellmotors (11a) kann somit die Höhe (h) des Fließkanals (1a) verringert werden.

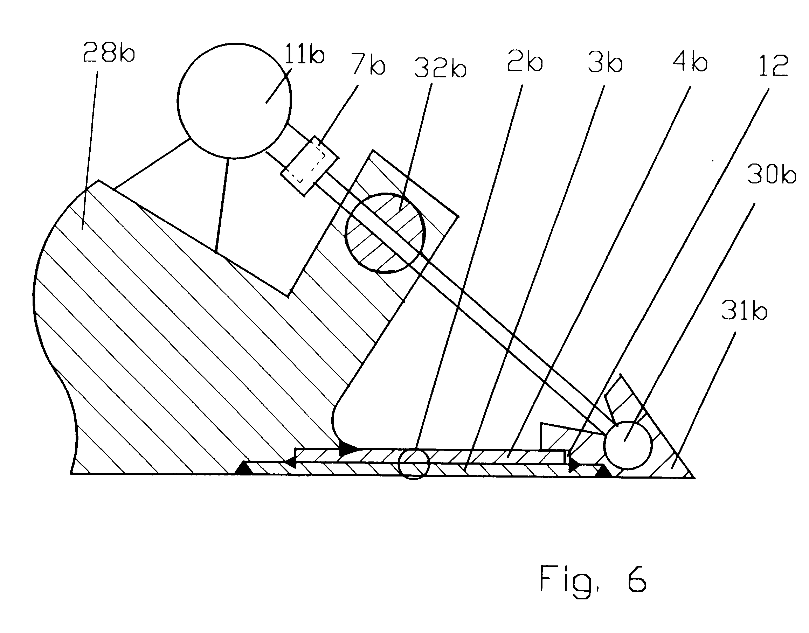

Die Fig. 6 zeigt in Schnittdarstellung eine andere Einrichtung zur Verstellung der Position des Blechpakets (2b). Auf Grund der formschlüssigen Anbindung der Stellschrauben (7b) die mit dem Fließkanalblech (3b) verschweißte Profilleiste (31b) kann die Lage des Blechpakets (2b) mittels Zug oder Druck in seiner Lage verändert werden. Dazu sind auf die Enden der Stellschrauben (7b) Kugeln (30b) angeschweißt, die in einer Bohrung einer mit dem Blechpaket (2b) verschweißten Profilleiste (31b) sitzen. Die Stellschrauben (7b) sind über ein Gewinde, das sich in einem Zylinderstück (32b) befindet, verbunden. Das Zylinderstück (32b) sitzt seinerseits in einer Bohrung des Werzugoberteils (28b). Durch Drehen der Stellschrauben von Hand oder mittels eines Stellmotors (11b) kann das Blechpaket (2b) nun hochgezogen oder heruntergedrückt werden. Das Deckblech (4b) ist nicht mit der Profilleiste (31b) verschweißt. Es liegt in einer Nut, die sich zwischen der Profilleiste (31b) und dem Fließkanalblech (3b) befindet. Am Ende dieser Nut bleibt zwischen dem Deckblech (4b) und der Profilleiste (31b) ein Spalt (12) um die Flexibilität des Blechpakets (2b) zu erhalten.

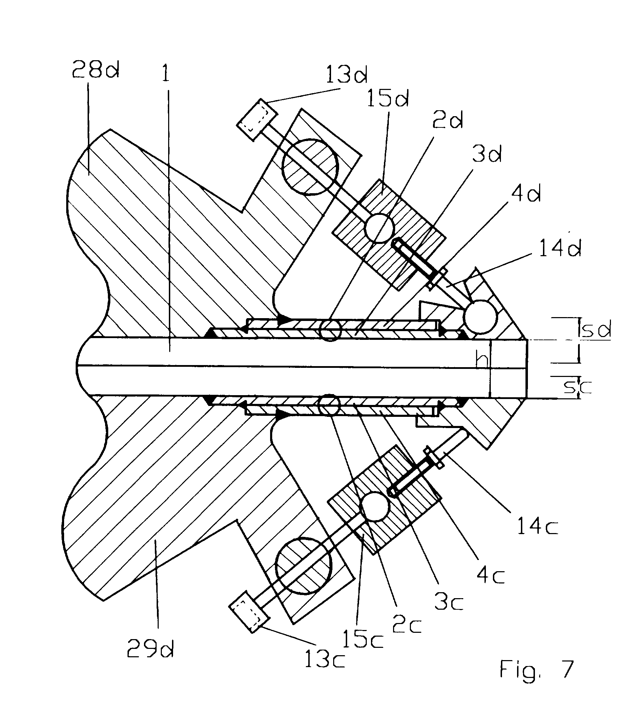

Fig. 7 zeigt in Schnittdarstellung ein Beispiel für ein Werkzeug mit zwei gegenüberliegend angeordneten verstellbaren Wänden. Bei dieser Lösung wirken auf die Blechpakete (2c,d) jeweils zwei unabhängige Stellmittel (13c,d und 14c,d), wobei die Stellmittel (13c,d) jeweils nur aus zwei Stellschrauben bestehen, die an den beiden Rändern des Werkzeugs positioniert sind. Mit ihrer Hilfe können die Verstellbalken (15c,d) in ihrer Gesamtheit verschoben werden, das heißt, auch die Blechpakete (2c,d) über ihre vollen Breiten verbogen werden. Zwischen den Verstellbalken (15c,d) und den Blechpaketen (2c,d) sind nochmals eine Vielzahl von Stellmitteln (14c,d) über der Breite der Vorrichtung angeordnet, mit denen die Blechpakete (2c,d) zusätzlich an definierten Stellen lokal begrenzt verschoben werden können. Die Lösung c erlaubt von der Neutralstellung des Blechpakets (2c) aus betrachtet nur eine Verringerung der Fließkanalhöhe (h) um den Stellweg (sc). Sie funktioniert wiederum nur solange, wie eine vollständige elastische Rückstellung des Blechpakets (2c) garantiert ist. Allerdings bietet sie ein Höchstmaß an Verstellkomfort und Bedienungsfreundlichkeit, da Gesamt- und Relativeinstellung entkoppelt sind und erlaubt unter Beibehaltung der Relativverstellung die Fließkanalhöhe (h) insgesamt zu verstellen, was in der Praxis häufig gewünscht ist. Diese Lösung ist prinzipiell auch statt mit einem Blechpaket mit einer massiven Fließkanalwand ausführbar. Das Blechpaket sorgt dabei lediglich für einen nochmals vergrößerten Verstellbereich. Die Konstruktion kann wiederum entweder nur in eine Fließkanalwand oder auch in zwei Fließkanalwände integriert werden. Das Gleiche gilt auch für die Ausführung d, bei der die Stellmittel (13d und 14d) jeweils formschlüssig an den Verstellbalken (15d) bzw. an das Blechpaket (2d) angeschlossen sind. Diese Lösung bietet das Maximum an Verstellmöglichkeit, wenn sie in zwei Fließkanalwände integriert ist, da sie wie bereits für Fig. 6 erläutert auch die Möglichkeit bietet, mit den Stellschrauben (13d und 14d) die Fließkanalhöhe (h) zu vergrößern. Der erreichbare Verstellweg (sd) beträgt dabei mehr als das zweifache des Verstellwegs (sc), da bei dieser Konstruktion das Blechpaket (2d) auch in geringem Maß plastisch deformiert werden kann. Es sind Stellwege von größer 10 mm realisierbar.

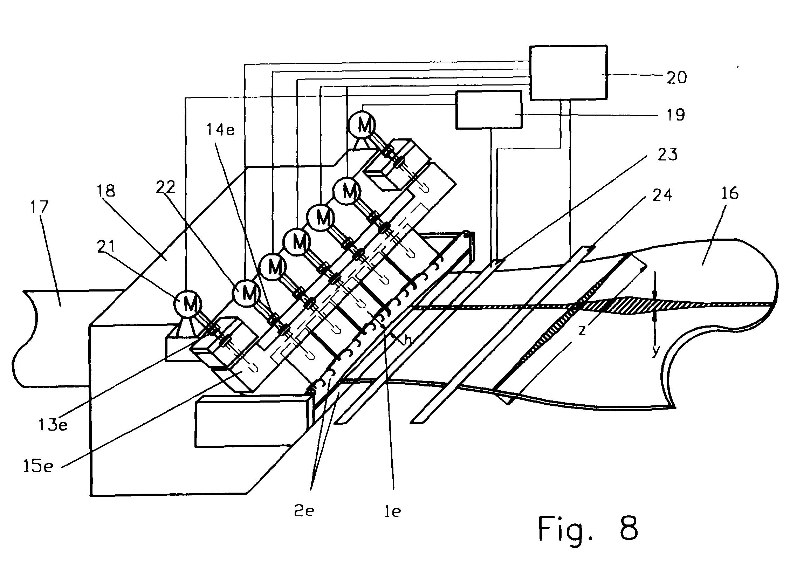

Fig. 8 skizziert ein Verfahren zum Austragen einer Massebahn mit veränderlicher Geometrie. Durch den mit den beschriebenen Vorrichtungen erreichbaren erheblich vergrößerten Stellweg und durch die Integration von zwei unabhängigen jeweils formschlüssig angebundenen Stellmitteln (13e und 14e), die auf mindestens eine flexible Wand (2e) eines Fließkanals (1e) wirken, ergeben sich neue verfahrenstechnische Möglichkeiten. Die Skizze zeigt beispielhaft ein erfindungsgemäßes Verfahren zum Austragen einer Massebahn (16), wobei die Dicke (y) und die Breite (z) der Massebahn (16) während des Austrags verändert werden können. Dabei wird die Masse mittels eines Extruders (17) mit Druck durch ein Werkzeug (18) gefördert. In dem Werkzeug (18) befindet sich der Fließkanal (1e) mit der flexiblen Wand (2e), die über unabhängige Stellmittel (13e und 14e) in ihrer Lage verändert werden kann. Der Fließkanal (1e) kann natürlich auch eine andere geometrische Form haben. So kann er zum Beispiel auch rund sein. Über die Stellmittel (13e), die auf den Verstellbalken (15e) wirken, kann man nun während des Masseaustrags die Höhe (h) des Austrittsspalts über der gesamten Breite gleichmäßig vergrößern oder verkleinern. Der Stellbereich sollte größer 8 mm vorzugsweise jedoch größer als 12 mm sein. Mittels der Stellmittel (14e), die in den Verstellbalken (15e) integriert sind, kann die Wand (2e) zusätzlich lokal an bestimmten Stellen über der Breite um die mittels der Stellmittel (13e) eingestellte Position herum verstellt werden. In diesem Fall sollte ein Verstellbereich von größer 2 mm vorzugsweise jedoch größer als 4 mm vorhanden sein.

Beide Verstellungen können prinzipiell manuell vorgenommen werden. In aller Regel ist es aber sinnvoll, diese Verstellung über ein Steuer- beziehungsweise über ein Regelgerät (19 bzw. 20) vorzunehmen. Dazu ist jedes einzelne Stellmittel mit einem ansteuerbaren Stellantrieb (21 bzw. 22) verbunden. Für den geregelten Betrieb muß natürlich noch die Dicke (y) und die Breite (z) der Massebahn (16) kontinuierlich erfaßt werden. Die Dicke (y) wird dabei während des Masseaustrags mit einem Dickenmeßsystem (23) und die Breite (z) mit einem Breitenmeßsystem (24) erfaßt und an den Regler übertragen, der dann einen Soll-Ist Vergleich durchführt, die neuen Stellgrößen ermittelt und an die Stellantriebe (21 bzw. 22) weitergibt. In Fällen, wo es auf extrem große Stellwege ankommt, ist es vortelhaft beide Wände (2e) des Fließkanals (1e) flexibel zu gestalten und mit Stellmitteln (13) sowie mit Steuer- bzw. Regelgeräten (19 bzw. 20) auszustatten. Dies empfiehlt sich besonders dann, wenn während des Masseaustrags auch gleichzeitig die Breite (z) der Massebahn (16) verändert werden soll. Das Verfahren kann zum Beispiel eingesetzt werden, um Preßwerkzeuge mit komplexer Geometrie mit Schmelze zu füllen, wobei das Preßwerkzeug und das Austragswerkzeug sich relativ zueinander bewegen. Im Bereich des Extrusionsblasformens kann das Verfahren eingesetzt werden, um während des Schlauchaustragsvorgangs neben der bekannten zeitabhängigen Profilierung des Vorformlings in Extrusionsrichtung auch eine zeitabhängige Profilierung des Vorformlings in Umfangsrichtung vorzunehmen. Damit kann die im Blasteil entstehende Dickenverteilung in erheblich verbessertem Maß positiv beeinflußt werden.

## Patentansprüche

1. Vorrichtung zur veränderlichen Begrenzung eines flachen Fließkanals, dessen Verhältnis von Fließkanalbreite b zur Fließkanalhöhe h größer als 10 ist, bei der mindestens eine Wand des Fließkanals (1) flexibel ausgebildet ist und mit Stellmitteln (7), die an der Rückseite über die Breite der flexiblen Wand so angeordnet sind, daß die Höhe des Fließkanals (1) insgesamt oder in Teilbereichen verstellbar ist, wobei die flexible Wand aus einem Paket (2) aus flächig aufeinanderliegenden Einzelblechen (3 - 5) besteht und das Einzelblech, an dem das strömende Medium entlangfließt, als Fließkanalblech (3) ausgebildet ist, welches mit dem Fließkanal (1) eine gemeinsame Wand bildet, dadurch gekennzeichnet, daß das Fließkanalblech (3) ringsum absolut dicht in eine Werkzeughälfte (28) integriert ist.

2. Vorrichtung nach Anspruch 1, dadurch gekennzeichnet, daß das Fließkanalblech (3) in einem Rahmen (8) absolut dicht eingebunden ist, der in die Werkzeughälfte (28) eingeschraubt, eingeschweißt oder ähnlich dicht eingebunden ist.

3. Vorrichtung nach einem der vorgehenden Ansprüche, dadurch gekennzeichnet, daß die Einzelbleche (3 - 5) eine Dicke d kleiner, gleich 2 mm, vorzugsweise jedoch kleiner, gleich 1 mm besitzen.

4. Vorrichtung nach einem der vorgehenden Ansprüche, dadurch gekennzeichnet, daß die Einzelbleche (4, 5) des Blechpakets (2) wenigstens an einer ihrer seitlichen Kanten mit einem Rahmen oder mit einer Werkzeughälfte (28), in der der Fließkanal (1) eingebunden ist, verschweißt sind.

5. Vorrichtung nach einem der vorgehenden Ansprüche, dadurch gekennzeichnet, daß die Bleche (3-5) im nicht ausgelenkten Zustand gekrümmt sind.

6. Vorrichtung nach einem der vorgehenden Ansprüche, dadurch gekennzeichnet, daß die Stellmittel (7) kraftschlüssig an das Blechpaket (2) angebunden sind, und daß die Einzelbleche (3-5) des Blechpakets (2) in einer Linie verschweißt sind.

## Claims

1. An apparatus for the variable limitation of a flat flow channel, the flow channel width b to flow channel height h ratio of which is greater than 10, in which apparatus at least one wall of the flow channel (1) is flexible, and comprising adjusters (7) which are disposed at the rear over the width of the flexible wall in such a way that the height of the flow channel (1) is adjustable entirely or locally, the flexible wall consisting of a stack (2) of individual sheets (3-5) placed one upon the other over their full surfaces, and the individual sheet, along which the fluid flows, being a flow channel sheet (3) which forms a wall together with the flow channel (1), characterized in that the flow channel sheet (3) is integrated in the tool half (28) absolutely leak-tight all around.

2. An apparatus according to claim 1, characterized in that the flow channel sheet (3) is integrated absolutely leak-tight in a frame (8) which is integrated in the tool half (28) by screwing, welding or in a similarly tight way.

3. An apparatus according to one of the preceding claims, characterized in that the individual sheets (3-5) possess a thickness d of less than or equal to 2 mm, preferably of less than or equal to 1 mm.

4. An apparatus according to one of the preceding claims, characterized in that at least one of the lateral edges of the individual sheets (4, 5) of the sheet stack (2) is fixed by welding to a frame or a tool half (28), in which the flow channel (1) is integrated.

5. An apparatus according to one of the preceding claims, characterized in that the sheets (3-5) are curved in the non-deflected condition.

6. An apparatus according to one of the preceding claims, characterized in that the adjusters (7) are non-positively bonded to the sheet stack (2) and in that the individual sheets (3-5) of the sheet stack (2) are welded in a line.

## Revendications

1. Dispositif de délimitation variable d'un canal d'écoulement plat dont la relation de la largeur du canal b par rapport à la hauteur du canal h est supérieure à 10, dans lequel au moins une paroi du canal d'écoulement (1) est réalisée flexible et déplaçable par des moyens de positionnement (7) qui sont agencés sur la face arrière sur la largeur de la paroi flexible, de telle sorte que la hauteur du canal d'écoulement (1) est réglable dans l'ensemble ou dans des zones partielles, la paroi flexible étant constituée par un empilement (2) de tôles individuelles (3 - 5) superposées à plat, et la tôle individuelle le long de laquelle s'écoule le fluide en écoulement est réalisée sous forme d'une tôle de canal d'écoulement (3) qui forme une paroi commune avec le canal d'écoulement (1), caractérisé en ce que la tôle de canal d'écoulement (3) est intégrée de façon absolument étanche sur tous les côtés dans une moitié d'outil (28).

2. Dispositif selon la revendication 1, caractérisé en ce que la tôle de canal d'écoulement (3) est intégrée de façon absolument étanche dans un cadre (8) qui est vissé, soudé ou intégré de façon similaire avec étanchéité dans la moitié d'outil (28).

3. Dispositif selon l'une ou l'autre des revendications précédentes, caractérisé en ce que les tôles individuelles (3 - 5) possèdent une épaisseur d inférieure ou égale à 2 mm, de préférence cependant inférieure ou égale à 1 mm.

4. Dispositif selon l'une quelconque des revendications précédentes, caractérisé en ce que les tôles individuelles (4, 5) de l'empilement de tôles (2) sont soudées au niveau de l'une au moins de leurs arêtes latérales avec un cadre ou avec une moitié d'outil (28) dans laquelle est intégré le canal d'écoulement (1).

5. Dispositif selon l'une quelconque des revendications précédentes, caractérisé en ce que les tôles (3 - 5) sont incurvées dans l'état non défléchi.

6. Dispositif selon l'une quelconque des revendications précédentes, caractérisé en ce que les moyens de positionnement (7) sont rattachés en coopération de forces à l'empilement de tôles (2), et en ce que les tôles individuelles (3 - 5) de l'empilement de tôles (2) sont soudées en une ligne.
